# EUROPÄISCHE PATENTSCHRIFT

(11) **EP 3 988 509 B1**
(45) Veröffentlichungstag und Bekanntmachung des Hinweises auf die Patenterteilung: **08.01.2025**
(21) Anmeldenummer: 21203920.0
(22) Anmeldetag: 21.10.2021
(51) Int. Cl.: C03C 1/00, C03B 1/00, C03C 3/06, C03C 4/00, C03C 4/02

(54) **HERSTELLUNG VON QUARZGLASFORMKÖRPERN UNTERSCHIEDLICHER GRAU- BIS SCHWARZFÄRBUNG FÜR OPTISCHE ANWENDUNGEN**
PRODUCTION OF QUARTZ GLASS MOULDINGS OF DIFFERENT GREY TO BLACK COLOURATION FOR OPTICAL APPLICATIONS
FABRICATION DE CORPS MOULÉS EN VERRE DE SILICE DE DIFFÉRENTES COULEURS ALLANT DU GRIS AU NOIR POUR DES APPLICATIONS OPTIQUES

(30) Priorität: 21.10.2020 DE 102020127660
(43) Veröffentlichungstag der Anmeldung: 27.04.2022
(73) Patentinhaber: Hellma GmbH & Co. KG, 79379 Müllheim (DE)
(72) Erfinder: Ell, Jürgen, 77955 Ettenheim (DE); Cohn, Markus, 79117 Freiburg (DE)
(74) Vertreter: Mertzlufft-Paufler, Cornelius

(56) Entgegenhaltungen:
- CA-A1- 2 697 951
- DE-U1- 7 522 994
- JP-B2- 6 937 497
- US-A- 6 017 389
- US-A- 6 136 083
- US-A1- 2007 082 190
- US-A1- 2011 201 735
- US-B1- 6 187 426

## Beschreibung

Die Offenbarung betrifft die Verwendung von bestimmten Mischungen in Sol-Gel-basierten Verfahren zur Herstellung von Formkörpern (Formteilen) für optische Anwendungen aus Quarzglas gewünschter Graufärbung bis hin zu schwarz Quarzgläsern, und insbesondere entsprechende Verfahren. Die Erfindung ist in den Ansprüchen definiert, wie auch durch die nachfolgend genannten unter die Ansprüche fallenden Erfindungsverkörperungen..

In der Spektroskopie und für optische Geräte und in der optischen Analytik besteht seit je her ein Bedarf an für Referenz- und Messzwecke geeigneten, nur teilweise (insbesondere in einem bestimmten Umfang) oder gar nicht für Licht (worunter im Rahmen der vorliegenden Offenbarung auch UV- und IR-Licht zu verstehen ist) durchlässigen und lichtabsorbierenden Gläsern, beispielsweise zum Bau von Küvetten, Mikrotiterplatten, UV/VIS Referenzmaterialien (z.B. solchen mit einer bestimmten Absorption auch im UV-Bereich oder dergleichen), Tauchsonden, die von einem optischen Messinstrument (beispielsweise einem Spektrometer)Licht in einen Reaktionsraum leiten und das Ableiten von im Reaktionsraum durch Wechselwirkung mit darin enthaltenen Materialien abgeändertem Licht ermöglichen und vielem anderem mehr im Bereich optischer Präzisionsmaterialien. So können unter anderem Einflüsse von Streulicht auf Messungen vermindert oder beseitigt werden.

US 6,136,083 beschreibt beispielsweise für Emaille geeignete Pigmente aus Partikeln, die mit einem Xerogel beschichtet werden, und ermöglicht oder suggeriert nicht eine Bereitstellung von für optische Zwecke geeigneten Formkörpern.

US 4,472,510 beschreibt die Verwendung von Siliziumverbindungen in Form von Organosilsesquioxanen und Siliziumverbindungen, von denen jede an Si direkt über Kohlenstoff gebundene organische Reste aufweist (es werden insbesondere in den Beispielen keine nur hydrolysierbare an Si gebundene Alkoxygruppen aufweisende Verbindungen wie TEOS verwendet), und Metalloxiden zur Herstellung von in erster Linie Keramiken unter Verwendung eines Sol/Gel-Verfahrens, die im Einzelfall schwarz sein können. Unterschiedliche Grau- oder Schwärzegrade sind so, insbesondere für hinreichend stabile und verarbeitbare Produkte und für den Bereich der Feinoptik, nicht herstellbar (mehr der Siliziumverbindungen mit Sigebundenem Kohlenstoff bedeutet z.B. auch weniger Vernetzung). Es gibt nur einen Temperaturbehandlungsschritt bei hohen Temperaturen. In dieser Schrift geht es in erster Linie um Materialien, die zur Hochtemperaturisolation, als hochfeste Gläser (Glaskeramiken), Verbundwerkstoffe, ferroelektrische Materialien und (wobei dies aufgrund hoher Kohlenstoffgehalte nicht glaubwürdig erscheint) Materialien zur Einkapselung von radioaktivem Abfall verwendet werden können.

DE 10 2015 102 858 A1 beschreibt die Herstellung von schwarzem Quarzglas in einem Sol-Gel-Prozess, wobei in der Solphase Graphitpartikel als solche zugefügt werden. Nachteilig ist an diesem Verfahren dennoch, dass die damit hergestellten Gläser hinsichtlich der Homogenität der Verteilung und der Korngrößenverteilung der Graphitpartikel im Glas eine geringe Uniformität aufweisen. Beim Schleifen und Fügen solcher Gläser treten Fehlstellen auf, z.B. weiße Flecken oder dergleichen, die auch die Qualität daraus hergestellter optischer Elemente, wie Küvetten, nachteilig beeinflussen können. Insbesondere sind manche Bearbeitungsmethoden, wie thermisches Verbinden (Bonden), für optische Zwecke - beispielsweise wegen Fehlstellen an der Oberfläche - schwierig oder unmöglich. Die zur Herstellung verwendete Dispersion muss (um einigermaßen gleichmäßige Verteilung der Kohlenstoffpartikel ohne zu starke Aggregation zu erzielen) Netz- und Dispergiermittel enthalten. Der Umgang mit Graphitpulvern erfordert, z.B. wegen Explosionsgefahr und Gefahr der Lungenschädigung, geeignete Schutzmaßnahmen.

WO 97/11035 beschreibt die Herstellung von Folien mittels Sol/Gel-Verfahrens, wobei reines MTEOS oder eine Mischung von MTEOS und TEOS verwendet werden. So können schwarze Folien hergestellt werden, doch ist das Hauptziel der Herstellung transparenter Folien. Die Folien haben eine Dicke von 2,5 bis 250 µm. Die Hydrolyse bei Solbildung wird bei basischem pH-Wert durchgeführt (Ammoniakwasser). Nach der Hydrolyse wird ein Alterungsschritt des basischen Sols ohne Kondensation durchgeführt, indem das Sol einer Alterung über mehrere Tage bei 40 bis 120 °C unterzogen wird. Erst danach findet eine Gelierung unter Lösungsmittelabdampfung statt. Das Ausbrennen der organischen Bestandteile ist hauptsächlich angestrebt (dünnere Folien in Luft gesintert). Sintern unter Stickstoff ermöglicht auch die Herstellung dickerer Folien (dicker als 50 µm), die schwarz ausfallen können. Im Sol müssen mindestens 70 Stoffmengen-% eines Silans mit nicht hydrolysierbarer Gruppe vorliegen, was stets zu einem sehr hohen Kohlenstoffgehalt und tiefer Schwärze des Produktes führt und zu starker Fluoreszenz führen dürfte, außer im Falle der Verwendung von Luft, wo der Kohlenstoff entfernt wird (transparente Folien). Das Verfahren ist nur geeignet um dünne Folien < 250 um herzustellen. Dabei wird das Lösemittel verdampft, um eine Gelierung auszulösen. Dadurch ist es nicht möglich, Formteile/Bauteile mit größeren Dicken (mind. 0,5mm Wandstärke, meistens deutlich mehr) herzustellen, da das Lösemittel aus der Mitte der Bauteile viel langsamer verdampft. Somit würde das Material außen schon Gelieren und Schrumpfen und wäre im inneren noch Flüssig, wodurch Risse entstehen bzw. kein stabiler Körper hergestellt werden kann.

DE 196 50 139 beschreibt die Herstellung von Schwarzpigmentpulvern in Sol/Gel-Verfahren, die in porösen glasartigen Materialien münden, die gemahlen und nach Bindemittelzugabe als Pigmentpulver verwendet werden. Die Voraussetzungen für Formteile für optische Zwecke können mit den porösen Materialien nicht erzielt werden. Mischungen von MTEOS und TEOS plus Kieselgel mit Salpetersäure werden exemplifiziert. Es werden sehr rasche Aufheizgeschwindigkeiten von mindestens 5 K/min verwendet, was Spannungen und Rissbildung hervorrufen kann. Reaktionsgase können nicht schnell genug entweichen, was zu Aufschäumen und damit Porenbildung führt. Die Offenbarung funktioniert möglicherweise für die Herstellung der beschriebenen Pigmente (Pulver). Aber ein defektfreier, spannungsfreier, rissfreier und dichter (ohne Poren) Volumenkörper ist so nicht herstellbar.

US 2009/0205370 beschreibt die Herstellung von transparenten Glasmonolithen mittels eines Sol/Gel-Verfahrens, die frei sind von Rissen und eine gute Transmission bei 190-200 nm zeigen. Schwarze oder graue Produkte werden nicht angestrebt, es wird unter Sauerstoff hochtemperaturbehandelt, was zu transparenten Gläsern führt. Unerwünschte bräunliche, teerartige Verfärbungen, die während des Herstellungsprozesses aufgrund des Vorhandenseins und Verkohlens von Lösungsmitteln auftreten, werden in Gegenwart von Sauerstoff bei der Hochtemperaturbehandlung im Keim beseitigt. Es werden keine Mischungen von zwei unterschiedlichen Organosiliziumverbindungen exemplifiziert, lediglich TEOS. Das Verhältnis von dispergiertem Silizium zu Siliziumalkoxid liegt hier bei 1,5:1 bis 5,5:1.

Für die Anwendung in der optischen Analyse wird ein Material mit sehr speziellen hochwertigen Eigenschaften benötigt. Das Material muss sehr homogen sein. Dies betrifft die Färbung, aber auch alle weiteren Materialeigenschaften, wie Mikrostruktur, Dichte, optische Eigenschaften, und Weiterverarbeitbarkeit. Außerdem muss das Material von den mechanischen Eigenschaften sehr nahe an einem hochwertigen Quarzglas liegen. Nur dann können die Materialien auch zusammengefügt und eingesetzt werden. Dazu gehört unter anderem, dass das Material auch komplett dicht gesintert ist und keine störende Porosität mehr aufweist. Das Material muss sich zu einer sehr glatten und defektfreien (keine Poren, oder Partikel) Oberfläche polieren lassen. Dies ist zum einen nötig, um Bauteile fehlerfrei mit anderen verbinden (bonden) zu können, zum anderen darf das Material bzw. die Oberfläche möglichst keinen Einfluss auf die optischen Messungen haben (z.B. durch störende Fluoreszenz). Defekte wie Poren oder Partikel können z.B. Streueffekte auslösen. Außerdem dürfen keine größeren Kohlenstoffpartikel / -Agglomerate vorhanden sein. Diese können beim thermischen Bonden Defekte an der Bondfläche erzeugen. Auch muss der Kohlenstoffgehalt sehr genau einstellbar sein. Dadurch kann der für die jeweilige Anwendung optimale Kompromiss zwischen Absorption und Fluoreszenz sehr genau eingestellt werden (mehr Kohlenstoff im Material erlaubt höhere Absorption, bedingt aber auch höhere Fluoreszenz). Zusätzlich spielt die sehr genaue und präzise Möglichkeit, den Kohlenstoffgehalt und damit die Färbung bzw. die Absorption zu kontrollieren, eine entscheidende Rolle bei der Herstellung von Referenzmaterialien für optischanalytische Zwecke. Dabei muss reproduzierbar ein sehr genauer Absorptionswert des Materials eingestellt werden können, da diese Materialien dazu dienen, Messgeräte zu kalibrieren. Die vorstehend diskutierten bekannten Materialien sind nicht geeignet, die erforderlichen Bedingungen zu erfüllen.

Es besteht also ein Bedarf an Quarzgläsern, welche die genannten Erfordernisse erfüllen, die schwarz sind oder unterschiedliche Graustufen aufweisen und für diverse optische Anwendungen nützlich sind, beispielsweise die eingangs erwähnten. Insbesondere eine Einstellung unterschiedlicher angestrebter Graustufen bis hin zu schwarz und die Einhaltung hoher Uniformität und Homogenität der Gläser ist hierbei von Interesse, um den hohen optischen Anforderungen an derartige Spezialgläser zu genügen.

Überraschend wurde gefunden, dass mittels eines neu entwickelten Prozesses mit all seinen nachfolgend noch im Detail dargelegten Einzelschritten die Kombination von (i) siliziumorganischen Verbindungen, die neben über Sauerstoff an Silizium gebundenen Resten an einem Siliziumatom auch mindestens einen über ein Kohlenstoffatom gebundenen (vorzugsweise ungesättigten) organischen Rest aufweisen, mit (ii)siliziumorganischen Verbindungen mit nur über Sauerstoff an Silizium gebundenen organischen Resten, mit (iii) Siliziumdioxid als dritter Komponente in einem Sol-Gel-Verfahren zur Herstellung besonders homogener Quarzgläser für optische Zwecke auch im Bereich hoher Präzision mit unterschiedlich eingestellten Graustufen bis hin zu schwarz eingesetzt werden kann. Es hat sich für die Einstellung einer Kombination von hinreichender Stabilität und guter Abstufbarkeit der Graustufen bis hin zu schwarz als wichtig erwiesen, Verbindungen des Typs (i) in Kombination mit solchen des Typs (ii) zu verwenden. Erst mit dieser Dreierkombination aus (i), (ii) und (iii) können verschiedene Bauteile von homogener Beschaffenheit mit unterschiedlichen Schwärzegraden rissfrei hergestellt werden.

Möglicherweise, ohne dass dies eine einschränkende Bedeutung haben soll, spielt hierbei die Möglichkeit der Verwendung der einen über ein Kohlenstoffatom an Silizium gebundenen organischen Rest tragenden Siliziumverbindung in flüssiger Form bei der Solherstellung, die eine sehr homogene Verteilung im Ansatz ermöglicht, und/oder die gute Vernetzung mittels der über Sauerstoff gebundene organische Reste tragenden siliziumorganischen Verbindungen bei der Gelbildung eine wichtige Rolle.

Die erfindungsgemäß hergestellten bzw. herstellbaren Formteile und Materialien sind homogen, defektfrei und arm an Fluoreszenz und erfüllen die hohen Anforderungen, die für die Verarbeitungsschritte im Küvettenbau/Bau von sonstigen optischen Bauteilen nötig sind. Dazu gehört unter anderem, dass sich eine qualitativ hochwertige polierte Fläche erzeugen lässt, ohne dass Einschlüsse oder Partikel gelöst werden und dadurch Löcher entstehen oder die Oberfläche zerkratzt wird. Außerdem ist durch die homogene Kohlenstoffverteilung und die Vermeidung von Kohlenstoffclustern ein thermisches Verbinden (Bonden) mit anderen Quarzglasbauteilen möglich, ohne dass sich in der Verbindungsfläche / Grenzfläche optisch störende mit bloßem Auge erkennbare Defekte wie silbrig glänzende Bereiche bilden.

In einer Erfindungsverkörperung beinhaltet die Erfindung allgemein die Verwendung eines Sol-Gel-Verfahrens zur Herstellung eines grauen oder schwarzen (also lichtabsorbierenden) Quarzglases mit einem (insbesondere angestrebten oder vorher bestimmten, vorzugsweise in engen Grenzen definierten, d.h.) beabsichtigten Grauheits- oder Schwärzegrad (als Spezialglas) in Form eines Formkörpers (Formteils), vorzugsweise mit einer Mindestdicke von 0,5 mm, insbesondere mit Abmessungen, z.B. Kantenlängen, im Bereich von 0,5 bis 200 mm, umfassend ein Sol-Gelverfahren, beinhaltend die Umsetzung (i) einer (nachfolgend auch "ersten") siliziumorganischen Verbindung, die mindestens einen an Silizium direkt über Kohlenstoff gebundenen organischen Rest und zugleich mindestens einen, vorzugsweise zwei oder mehr, insbesondere drei, an Silizium gebundene hydrolysierbare (insbesondere an das Silizium über ein Sauerstoffatom gebundene) organische Reste beinhaltet, (ii) einer (nachfolgend auch "zweiten") siliziumorganischen Verbindung mit nur über Sauerstoff an Silizium gebundenen (somit alle hydrolysierbaren) organischen Resten und (iii) von Siliziumdioxid als dritter Komponente in dem Sol-Gel-Verfahren mit einem pyrolytischen Schritt, und vorzugsweise einem Sinterschritt, wobei der pyrolytische Schritt und der Sinterschritt mittels eines oder mehrerer, insbesondere mittels eines oder zweier Temperaturbehandlungsschritte, beispielsweise im bevorzugten ersten Fall ("ein") direkt oder vorzugsweise in Stufen ineinander übergehend, im zweiten Fall ("oder mehrerer, insbesondere zweier") als separate Schritte, unter Einstellung einer (reproduzierbaren, was beispielsweise für Referenzelemente, aber auch bei Küvetten besonders wichtig ist, insbesondere angestrebten oder vorher bestimmten, vorzugsweise in engen Grenzen definierten, das heißt, beabsichtigten) Graustufe bis hin zu schwarz durch Einstellung des Mengenanteils der ersten siliziumorganischen Verbindung im Sol und ferner der Pyrolysebedingungen stattfindet. Hierbei wird vorzugsweise durch den relativen Mengenanteil der verwendeten (ersten) siliziumorganischen Verbindung, die neben über Sauerstoff an Silizium gebundenen hydrolysierbaren organischen Resten auch über ein Kohlenstoffatom an Silizium gebundene organische Reste aufweist, im Verhältnis zu Siliziumdioxid und insbesondere der weiteren (zweiten) siliziumorganischen Verbindung, die nur hydrolysierbare über Sauerstoff gebundene siliziumgebundene organische Reste beinhaltet, im Sol-Gel-Verfahren und nach geeigneter Pyrolyse und Sinterung Kohlenstoff in feiner Verteilung im resultierenden Formteil aus Quarzglas freigesetzt, wobei ein (insbesondere angestrebter oder vorher bestimmter, vorzugsweise in engen Grenzen definierter, das heißt, beabsichtigter) Grad an Lichtabsorption bzw. Transmission (von hellgrau über mittelgrau bis hin zu dunkelgrau und schwarz, das heißt von noch großer über mittlere über stärkere bis hin zu praktisch vollständiger Lichtabsorption), in erster Linie durch den Anteil der ersten siliziumorganischen Verbindung, aber ferner auch durch Pyrolyse und/oder Sintern und/oder Dicke des resultierenden Quarzglases, eingestellt werden kann.

Es ist anzumerken, dass im Falle der Verwendung der genannten Präkursor-Moleküle (der beiden unterschiedlichen siliziumorganischen Verbindung(styp)en als Edukte für den Sol-Gel-Prozess) solche bevorzugt umfasst sind, die je ein unkondensiertes Grundmolekül (vorzugsweise mit nur einem Siliziumatom) enthalten (Monomere), jedoch ist es ferner möglich, dass (beispielsweise durch Wasser aus der Luft oder ähnliches) bereits eine teilweise Hydrolyse und Oligomerisation eintreten kann - sofern von den Verbindungen die Rede ist, können dabei resultierende Oligomere und hydrolysierte Zwischenprodukte ebenfalls in einer gewissen Menge (beispielsweise bis zu 10 Gew.-%, bezogen auf theoretische Ausgangsmenge an Monomeren, messbar z.B. mittels Massenspektrometrie oder quantitativem NMR) enthalten sein und diese sollen jeweils mit als umfasst anzusehen sein wenn von spezifischen Verbindungen oder Verbindungstypen die Rede ist.

In einer weiteren Erfindungsverkörperung betrifft die Erfindung ein Verfahren zur Herstellung eines grauen oder schwarzen Quarzglases in Form eines Formteiles (Formkörpers) für optische Anwendungen, beinhaltend folgende Schritte:
- Herstellung eines wässrigen Sols (ohne weitere organische Lösungsmittel) aus (iii) einer wässrigen Dispersion aus Siliziumdioxid, (i) einem Anteil einer oder der ersten siliziumorganischen Verbindung, die mindestens einen an Silizium direkt über Kohlenstoff gebundenen organischen Rest und zugleich mindestens einen, vorzugsweise zwei oder insbesondere drei, an Silizium gebundene hydrolysierbare (insbesondere an das Silizium über ein Sauerstoffatom gebundene) organische Reste beinhaltet, vorzugsweise mit der Formel (R²O)₂(R³)₂Si (Formel I) oder insbesondere mit der Formel (R²O)₃R³Si (Formel II), worin die Reste R² unabhängig voneinander Alkyl, insbesondere C₁-C₈-Alkyl, bedeuten, insbesondere Methyl oder Ethyl, und R³ für Alkyl, insbesondere C₁-C₈-Alkyl, vorzugsweise Ethyl oder vor allem Methyl, für C₂-C₈-Alkenyl (bevorzugt), insbesondere Ethenyl (=Vinyl; sehr bevorzugt), Prop-3-enyl (= Allyl; bevorzugt) oder Prop-1-enyl, Prop-3-inyl, Prop-1-inyl, für C₆-C₁₄-Aryl, insbesondere Phenyl, für C₆-C₁₄-Aryl-C₁-C₈-Alkyl, insbesondere Phenylmethyl; ferner für 2-(2-Methyl-3-butenoyloxy)-ethyl, Glycidyloxy-C₂-C₈-Alkyl, insbesondere 2-Glycidyloxyethyl, Mercapto-C₁-C₈-alkyl, insbesondere 3-Mercaptopropyl, oder Amino-C₁-C₈-alkylamino-C₁-C₈-alkyl, insbesondere 2-(2-Aminoethylamino)-ethyl; steht, und (ii) einer oder der zweiten siliziumorganischen Verbindung mit nur über Sauerstoff an Silizium gebundenen (somit alle hydrolysierbaren) organischen Resten, insbesondere der Formel R¹₄Si, worin die Reste R¹ unabhängig voneinander aus Alkoxy, insbesondere C₁-C₈ Alkoxy, vorzugsweise Methoxy oder Ethoxy bestehen, wobei unter Einstellung eines sauren pH-Wertes mittels einer (vorzugsweise flüchtigen) organischen oder insbesondere anorganischen Säure, vorzugsweise eines Halogenkohlenwasserstoffes, wie HCl, Hydrolyse (vorzugsweise unter Rühren) durchgeführt wird/eintritt;
- nach Stehenlassen, vorzugsweise ca. 0,2 bis 2 Tage, z.B. etwa 1 Tag, insbesondere bei Temperaturen im Bereich von 0 °C bis 50 °C, insbesondere bei Raumtemperatur (20-25°C) Erhöhung des pH-Wertes mittels einer (vorzugsweise flüchtigen) anorganischen Base, vorzugsweise Ammoniak, wobei der pH-Wert im (quasi nur noch) leicht sauren Bereich eingestellt wird;
- Gießen des Sols in eine (spezifische) Form zur Herstellung des Formteils (auch hier kann neben der hier stattfindenden Kondensation noch Hydrolyse stattfinden);
- Gelbildung (umfasst Kondensation);
- Altern, vorzugsweise bei einer Temperatur im Bereich von 10 °C bis 30 °C, z.B. bei 20 °C bis 25 °C (Raumtemperatur) über 1 bis 10 Tage, z.B. 1 bis 5 Tage (hierbei findet weitere Vernetzung/Kondensation statt);
- Trocknung bei erhöhter Temperatur, vorzugsweise im Bereich von 30 °C bis 60 °C, z.B. bei ungefähr 50 °C, vorzugsweise für eine Dauer von 2 bis 50, z.B. von 3 bis 30 Tagen;
- Freisetzung von chemisch (kovalent) gebundenem Kohlenstoff aus der ersten siliziumorganischen Verbindung als solchem unter Bildung von (im späteren Glaskörper verbleibendem) Kohlenstoff in ein oder mehreren grau- oder insbesondere schwarzfärbenden Erscheinungsformen (insbesondere als Kohlenstoffpartikel) durch wenigstens eine Temperaturbehandlung zur Pyrolyse und/oder zum Sintern des (zunächst quasi "Grünform"-) Formteils, wobei das Formteil während der Temperaturbehandlung einer einzigen Temperaturbehandlung bis zu einer (für das Sintern vorgesehenen) Höchsttemperatur oder mindestens zwei Temperaturbehandlungen mit mindestens zwei unterschiedlichen Höchsttemperaturen unterzogen wird, vorzugsweise einer ersten Temperaturbehandlung zur Pyrolyse und dann einer zweiten Temperaturbehandlung unter höheren Temperaturen als bei der ersten Temperaturbehandlung, gegebenenfalls unter weiterer Pyrolyse, zum Sintern, wobei diese beiden Temperaturbehandlungen (Sintern und Pyrolyse) insbesondere in einem Ofengang durchgeführt werden;
wobei die Temperaturbehandlung(en) unter Inertgas oder Vakuum (in Abwesenheit von Sauerstoff) und vorzugsweise auf einem chemisch inerten Substrat durchgeführt werden, in erster Linie um störende chemische Reaktionen, im Inneren und vor allem an der Außenseite des Formkörpers, zu vermeiden.

In einer zweiten Ausführungsform der weiteren Verkörperung der Erfindung betrifft die Erfindung ein Verfahren gemäß der weiteren Verkörperung, wobei die über Sauerstoff an Silizium gebundenen organischen Reste aus Alkyloxy (= Alkoxy), Alkenyloxy, Alkinyloxy, Phenyloxy, Phenylalkyloxy, Alkenylcarbonyloxyalkyloxy, Glycidyloxyalkyloxy, Mercaptoalkyloxy und Aminoalkylaminoalkyloxy ausgewählt sind; und die über Kohlenstoff an Silizium gebundenen organischen Reste unabhängig voneinander aus Alkyl, Alkenyl, Alkinyl, Phenyl, Phenylalkyl, Alkenylcarbonyloxyalkyl, Glycidyloxyalkyl, Mercaptoalkyl und Aminoalkylaminoalkyl ausgewählt sind, insbesondere aus Alkenyl, Phenyl und/oder (ferner) Alkyl; in erster Linie aus Alkenyl, wie Vinyl oder ferner Allyl; wobei jeweils Alkyl und -alkyl (letzteres als Ende einer Bezeichnung eines genannten Verbindungstyps) unabhängig voneinander verzweigt oder unverzweigt sind und vorzugsweise jeweils ein bis acht Kohlenstoffatome aufweisen und Alkenyl und Alkinyl ebenfalls unabhängig voneinander verzweigt oder unverzweigt sind und vorzugsweise jeweils zwei bis acht Kohlenstoffatome aufweisen.

In einer Erfindungsverkörperung betrifft die Erfindung eine Verwendung oder ein Verfahren nach einem der vorstehenden Absätze, beinhaltend, dass oder wobei nach einer oder der Solherstellung das Sol auf einen sauren pH-Wert im Bereich von 1 bis 5, vorteilhafter von 1,5 bis 3,5, insbesondere von 2 bis 3, vorzugsweise auf pH 2,1 bis 2,5, beispielsweise auf pH 2,3, eingestellt wird, insbesondere zur Hydrolyse über Sauerstoff an Si gebundenen organischen Reste, wie der Gruppen R¹ und/oder R², vorzugsweise durch Zugabe von einer organischen oder insbesondere anorganischen Säure, wie Salzsäure. Dies ermöglicht eine hinreichend vollständige Hydrolyse, welche einen besonders stabilen, festen und dichten Formkörper ermöglicht.

Eine Erfindungsverkörperung betrifft ein Verfahren oder eine Verwendung nach einem der vorstehenden Absätze, beinhaltend, dass oder wobei der pH-Wert vor einem oder dem Gießen in eine gewünschte Form auf einen weniger sauren pH-Wert (auch als "pH-Wert im leicht sauren Bereich" bezeichnet") als bei der Solherstellung, vorzugsweise einen Wert von 4 bis 6,5, insbesondere von 4 bis 5, vorteilhaft von 4,5 bis 5 eingestellt wird, insbesondere zur Gelierung (Gelherstellung unter Kondensation), vorzugsweise durch Zugabe einer (insbesondere beim späteren Erhitzen) flüchtigen anorganischen Base, insbesondere von Ammoniumhydroxid ("Ammoniak").

Eine Erfindungsverkörperung betrifft ein Verfahren oder eine Verwendung nach einem der vorstehenden Absätze, beinhaltend dass oder wobei als zweite siliziumorganische Verbindung Tetraethylorthosilikat und/oder Tetramethylorthosilikat zugegeben wird.

Eine Erfindungsverkörperung betrifft ein Verfahren oder eine Verwendung nach einem der vorstehenden Absätze, wobei als erste siliziumorganische Verbindung Vinyltriethoxysilan und/oder Methyltriethoxysilan und/oder Phenyltriethoxysilan zugegeben wird, insbesondere Vinyltriethoxysilan. Vinyltriethoxysilan als erste siliziumorganische Verbindung ist besonders vorteilhaft, da diese (im Vergleich zu Alkyl-, wie Methyltriethoxysilan) bei der gleichen Menge an in das Sol eingebrachten Kohlenstoffatomen eine deutlich intensivere Grau- und Schwarzfärbung erzeugt. Daraus ergibt sich, dass bei der Verwendung von Vinyltriethoxysilan als der ersten siliziumorganischen Verbindung im Vergleich zu Akylgruppen wie Methyltriethoxysilan bei gleichem Färbungsgrad mehr hydrolysierbare Gruppen eingebracht werden können, was zu einem höheren Vernetzungsgrad und damit zu einem dichteren, defektfreien Quarzglas/Formkörper führt.

Eine Erfindungsverkörperung betrifft ein Verfahren oder eine Verwendung nach einem der vorstehenden Absätze, beinhaltend dass oder wobei ein oder das Formteil nach dem Gießen in eine gewünschte Form und/oder vor einer Entformung des Formteils und/oder vor einem Trocknungsschritt in einem Alterungsschritt (bei der Kondensation) behandelt wird, wobei das (noch quasi als Grünform vorliegende) Formteil bzw. der Ansatz in der entsprechenden Form während des Alterungsschrittes bei Raumtemperatur altert.

Eine Erfindungsverkörperung betrifft ein Verfahren oder eine Verwendung nach einem der vorstehenden Absätze, beinhaltend dass oder wobei das Formteil vor einer oder der wenigstens einen Temperaturbehandlung, vorzugsweise bei erhöhter Temperatur, insbesondere bei einer Temperatur von 30 bis 70 °C, vor allem von 45 bis 55 °C und/oder einer relativen Luftfeuchtigkeit von 5% bis 50 %, vorzugsweise von 10%-20%, vorzugsweise unter normalem Atmosphärendruck, getrocknet wird.

Eine Erfindungsverkörperung betrifft ein Verfahren oder eine Verwendung nach einem der vorstehenden Absätze, beinhaltend dass oder wobei ein oder der wenigstens eine Temperaturbehandlungsschritt unter Inertgas, wie Stickstoff, Helium oder Argon, oder Vakuum oder ferner einem reduzierenden Gas, wie Wasserstoff, oder einer Kombination von zwei oder mehr der genannten Varianten, durchgeführt wird, insbesondere dass der gesamte Temperaturbehandlungsschritt unter Inertgas oder Vakuum oder dem reduzierenden Gas durchgeführt wird.

Eine Erfindungsverkörperung betrifft ein Verfahren oder eine Verwendung nach einem der vorstehenden Absätze, beinhaltend dass oder wobei ein oder das Formteil während eines oder des Temperaturbehandlungsschritts in einer ersten Temperaturbehandlungsstufe vorzugsweise bis maximal etwa 1000 oder vorzugsweise bis maximal etwa 900 °C oder insbesondere bis maximal etwa 800 °C, vorzugsweise von 600 bis 800 °C, beispielsweise von 680 bis 750 °C oder von 700 bis 800 °C, und/oder in einer zweiten Temperaturbehandlungsstufe bis maximal etwa 1400 °C, vorzugsweise von 1150 bis 1380 °C, insbesondere von 1200 bis 1350 °C, oder von 1200 bis 1300 °C, behandelt wird. Alternativ kann die Temperatur in einem einzigen Ofengang (als ein Temperaturbehandlungsschritt), z.B. kontinuierlich, auf maximal etwa 1400 °C, vorzugsweise von 1150 bis 1380 °C, insbesondere von 1200 bis 1350 oder bis 1300 °C, erhöht werden.

Eine Erfindungsverkörperung betrifft ein Verfahren oder eine Verwendung nach einem der vorstehenden Absätze, beinhaltend dass oder wobei der Kohlenstoffgehalt des direkt über Kohlenstoff an Silizium gebundenen organischen Rests (z.B. R³) im Sol der ersten siliziumorganischen Verbindung im Verhältnis zu dem im fertigen Quarzglas verbleibenden Siliziumdioxid maximal 20 000 ppm in Gewichtsanteilen, vorzugsweise von maximal 15 000 ppm in Gewichtsanteilen beträgt, beispielsweise im Falle des sehr bevorzugten Vinyltriethoxysilans für besonders bevorzugte schwarze Gläser 8 000 bis 10 000 ppm, wie 9000 ppm, für graue Materialien (z.B. Referenzmaterialien) 2000 bis 5000 ppm, bei besonders schwarzen Formteilen (etwa sehr dünne Teile, bei denen eine Fluoreszenzvermeidung nicht wichtig ist, 12000 bis 14000 ppm, beträgt. Als untere Grenze können vorzugsweise 500 oder 1000 ppm der ersten siliziumorganischen Verbindung eingesetzt werden.

Vorteilhaft liegt der Gewichtsanteil der ersten siliziumorganischen Verbindung im Sol, bezogen auf die Gesamtmenge an Silanen bei 0,001 bis 20 Gew.-%, insbesondere bei 0,01 bis 15 Gew.-%, vorzugsweise bei 0,01 bis 10 Gew.-%, bevorzugt bei 0,01 bis 6 Gew.-%. Hierdurch kann gegenüber einem höheren Kohlenstoffanteil die Bildung unerwünschter Poren oder sogar ein Aufschäumen während der Pyrolyse und des Sinterns vermindert bzw. ganz verhindert werden, was bei Folien nicht notwendig sein mag, jedoch bei Formteilen, aus denen Reaktionsgase etc. schwerer entweichen können, sinnvoll ist. So wird auch das kontrollierte Einstellen einer gewünschten Graustufe bzw. von schwarz erleichtert.

In einer vorteilhaften Ausführungsform liegt das Verhältnis von dispergiertem Siliziumdioxid zu Siliziumalkoxid zwischen 1:1 und 2,5:1. Dies sorgt für eine geeignete Porengröße im Gel und im noch nicht gesinterten Grünkörper, und es erleichtert die Grau- bis Schwarzfärbung, eine gute Entkernung und die Herstellung auch größerer Bauteile. Beispielsweise werden beim Entkernen, aber auch beim Schrumpfen, Rissbildungen in der Form an Ausbuchtungen, Nuten, Bohrungen, Rundungen, scharfen Kanten und dergleichen vermieden.

Eine Erfindungsverkörperung betrifft ein Verfahren oder eine Verwendung nach einem der vorstehenden Absätze, beinhaltend dass oder wobei das hergestellte Quarzglas weiter zur Herstellung von optischen Komponenten für UV/VIS/NIR-Spektroskopie verwendet wird, wie z.B. einem Probenhalter, wie einer Küvette (insbesondere für Absorptions-, Streulicht- und/oder Fluoreszenzmessungen), einer Mikromesszelle, einem Messkopf von Tauchsonden, einer Mikrotiterplatte oder einem Referenzmaterial oder Referenzelement - die jeweils teilweise (abschnittsweise) oder ganz in grau oder schwarz ausgeführt sein können - verwendet wird.

Eine Erfindungsverkörperung betrifft ein Verfahren oder eine Verwendung nach einem der vorstehenden Absätze, beinhaltend dass oder wobei das Sol frei von als solchen zugesetzten grau- oder schwarzfärbenden Kohlenstoffpartikeln und/oder frei von Netz- und Dispergiermitteln ist.

Eine Erfindungsverkörperung betrifft ein Verfahren oder eine Verwendung nach einem der vorstehenden Absätze, beinhaltend dass oder wobei während eines oder des wenigstens einen Temperaturbehandlungsschrittes eine (reproduzierbare, gezielt eingestellte, über das Formteil homogen verteilte) Einfärbung (Graufärbung oder Schwarzfärbung) eines oder des Formteils erfolgt.

Für Referenzzwecke beschreibt die vorliegende Offenbarung ein graues oder schwarzes Quarzglas-Formteil, vorzugsweise mit einer Mindestdicke von 0,5 mm, insbesondere mit Abmessungen, z.B. Kantenlängen, im Bereich von 0,5 bis 200 mm, hergestellt durch ein Verfahren nach einem der vorstehenden Absätze, beinhaltend dass oder wobei das Quarzglas Kohlenstoff in feinkörniger Verteilung, begründet durch die Verteilung der kohlenstoffliefernden ersten siliziumorganischen Verbindung im Sol und bei der Gelbildung und durch einen Pyrolyseschritt, umfasst.

Zu den Vorteilen der erfindungsgemäßen Verwendungen und Verfahren gehört, dass ein Arbeiten ohne Graphitstaub möglich ist, was das Explosionsrisiko erhöhen würde, und insbesondere, dass die erhältlichen Quarzgläser eine hohe Homogenität und uniforme Verteilung des aus siliziumorganischen Verbindungen pyrolytisch freigesetzten Kohlenstoffs aufweisen. Sie sind hervorragend schleifbar und polierbar und ermöglichen so aufgrund ihrer sehr glatten Oberflächen, der fehlenden oder vernachlässigbaren Porosität, insgesamt insbesondere aufgrund der herausragenden Homogenität, ein gutes Fügen von beispielsweise plattenförmigen erfindungsgemäß hergestellten grauen oder schwarzen Quarzgläsern mit ebenfalls erfindungsgemäß hergestellten grauen oder schwarzen Quarzgläsern oder zusätzlichen Quarzgläsern mit anderen optischen Eigenschaften, beispielsweise sehr hoher Transparenz. Das Fügen kann sogar schon ohne thermische Behandlung initiiert werden, hier kommt es zu einer hohen Haftung (wohl durch van-der-Waals- und polare Kräfte) aufgrund der glatten Oberflächen. Durch eine weitere thermische Behandlung können die Kontaktflächen dann in noch festere Bindung zueinander gebracht werden. Damit eignen sich die erfindungsgemäß hergestellten Quarzgläser zur Herstellung praktisch defektfreier spektroskopischer Messschnittstellen durch Direkt-Bonden (Direct Bonding), insbesondere ohne mit dem Auge oder optischen Hilfsmitteln erkennbare Blasenbildung an den Fügeflächen. Die Basis hierfür ist die (z.B. mikroskopisch oder submikroskopisch) feine Verteilung des pyrolytisch aus siliziumorganischen Verbindungen unter Bildung von Kohlenstoff in ein oder mehreren grau- oder schwarzfärbenden Erscheinungsformen freigesetzten Kohlenstoffs (quasi, ohne dass dies eine Einschränkung der erhaltenen Erscheinungsformen bedeuten soll, als in situ gebildete "Kohlenstoff-Partikel") ohne grobe Agglomerationen und Teilchen, die z.B. aus einer Oberfläche hervorstehen oder bei einer mechanischen Behandlung herausbrechen könnten und so eine zu poröse und zu raue Oberfläche verursachen könnten, wie es bei im Stand der Technik beschriebenen, durch Graphitzusatz erhältlichen Materialien leider trotz der bei der Herstellung verwendeten Netz- und Dispergiermittel gefunden wurde.

Die erfindungsgemäß erhältlichen Quarzgläser können somit sehr gut mit anderen Quarzglasteilen (beispielsweise solchen, die transparent sind) verbunden werden. So wird es möglich, optische Komponenten für UV/VIS/(N)IR-Spektroskopie herzustellen, die in gewünschten Bereichen transparent sind, in anderen Bereichen dagegen grau oder schwarz bis hin zu fast oder praktisch vollständig lichtundurchlässig (was insbesondere eine Transmission von 0.2 % oder weniger im gewünschten Wellenlängenbereich, insbesondere zwischen etwa 200 bis 2000 nm, oder von weniger als 2 % im Bereich von oberhalb 2000 bis etwa 3200 nm, bedeutet). Diese Bereiche gelten vorzugsweise bei geeigneten Dicken, vorzugsweise im Bereich von 1 mm, insbesondere nach Polieren, des erhaltenen Quarzglases.

Die erfindungsgemäß hergestellten Quarzgläser eignen sich hervorragend zur industriellen Bearbeitung, z.B. durch Schleifen, Läppen und/oder Polieren, wobei visuell, mit einer Lupe oder auch vorzugsweise unter einem Mikroskop defektfreie oder fast defektfreie Produkte erhalten werden können.

Die erfindungsgemäß hergestellten grauen oder schwarzen Quarzgläser zeigen keine oder nur eine sehr geringe Fluoreszenz bei Anregung mit UV-, VIS- oder NIR-Licht, insbesondere im ultravioletten Bereich. Mittels Bestimmung einer Fluoreszenz (z.B. orange Fluoreszenz bei Bestrahlung mit UV-Licht einer Wellenlänge von 254 nm) oder der Messung von Fluoreszenzspektren der Materialien kann diese Eigenschaft auch zum Nachweis der Materialien dienen - die (erfindungsgemäß geringe oder ganz fehlende) Fluoreszenz dient dann als ein Charakteristikum der erfindungsgemäß hergestellten Quarzgläser, das ihre speziellen (auch strukturellen, durch die Herstellung bedingten) Eigenschaften aufzeigen und somit die Neuheit der erfindungsgemäß hergestellten Materialien belegen kann.

Die Grau- bis Schwarztöne können in einem weiten Bereich, insbesondere durch Dosierung des relativen Anteils an Si-C-Gruppen enthaltender Verbindung im Sol eingestellt werden, wobei ferner zusätzlich die endgültige Tönung durch die Art der Pyrolyse und des Sinterns (Dauer, Temperaturen) eingestellt werden kann, wie auch durch die Dicke der erhältlichen Quarzgläser. Dies bietet beispielsweise eine hervorragende Möglichkeit zur Herstellung von Referenzmaterialien und Referenzelementen für die Spektroskopie mit unterschiedlicher definierter Lichtabsorption, beispielsweise für Kalibrierungszwecke. Die erfindungsgemäß hergestellten Quarzgläser eignen sich beispielsweise als Standardmaterialien zur Bestimmung und Prüfung der Wellenlängengenauigkeit und der Messwertegenauigkeit bei spektroskopischen Geräten.

Nachstehend werden einige Definitionen für Begriffe ergänzt, die bevorzugte Varianten von allgemeineren Begriffen darstellen und vorzugsweise jeweils einzeln oder zu mehreren allgemeineren Begriffen in Verkörperungen oder Ausführungsformen der Erfindung ersetzen, was zu weiteren bevorzugten Erfindungsverkörperungen und Ausführungsformen der Erfindung führt, die hiermit ebenfalls Gegenstand der Offenbarung sind. Auch vorstehend wurden bereits spezifischere Definitionen gegeben, die auch bei anderen Verkörperungen und Ausführungsformen der Erfindung eingesetzt werden können.

Der Begriff "Quarzglas" oder "Quarzgläser" beinhaltet, wo er in der vorliegenden Offenbarung verwendet wird, auch aus diesen Materialien hergestellte Formkörper (als Produkt als solches sind Formkörper keine Erfindungsverkörperung), insbesondere (z.B. rechteckige, quadratische, ferner an Ecken und/oder Kanten abgerundete, runde oder anders geformte) Platten oder Plättchen, (die auch an einer oder mehreren Kanten abgerundet oder abgeschrägt sein können oder ferner unter anderem Hinterschneidungen, Ausbuchtungen, Nuten, Bohrungen, Rundungen oder scharfe Kanten aufweisen können. Anstelle des Begriffes "Quarzglas" oder "Quarzgläser" können also auch die Begriffe "Formkörper aus Quarzglas" verwendet werden.

Unter Tauchsonden sind insbesondere faseroptische Tauchsonden und Durchflussmesszellen zu verstehen, die Online-Messungen in Herstellungs- und Produktionsprozessen ermöglichen. Beispielsweise über Öffnungen in Reaktionsräume eingebracht (z.B. angeflanscht), ermöglichen sie die Zuleitung von Licht (beispielsweise einer bestimmten spektralen Zusammensetzung) und die Ableitung von durch die Stoffe im Reaktionsraum (Absorption oder ferner Fluoreszenz) spektral verändertem Licht, das dann einem Spektrometer zur Auswertung zugeleitet werden kann.

Unter Referenzmaterialien sind insbesondere Referenzelemente wie Filter zu verstehen, die Bereiche definierter Lichtdurchlässigkeit (Licht umfasst neben sichtbarem Licht auch UV- oder IR-Strahlung) aufweisen und so eine Kalibrierung oder Überprüfung von (insbesondere spektroskopischen) Messgeräten ermöglichen, und/oder solche, die Absorptionsmaxima bei definierten Wellenlängen, z.B. im UV-Bereich, haben. Auch entsprechende Materialien mit Bereichen unterschiedlicher Transparenz oder unterschiedlicher Absorption bestimmter Wellenlängen von Licht in Mikrotiterplatten oder dergleichen können Referenzelemente sein.

So weisen erfindungsgemäß hergestellte Quarzgläser, insbesondere die im visuellen Bereich grauen Quarzgläser, einen Absorptionspeak (Transmissionsminimum) im UV-Bereich auf, der zur Kalibrierung von Wellenlängen bei Spektrometern verwendet werden kann. Ansonsten können unterschiedliche Grau-Grade bis hin zu schwarz zur Kalibrierung der Lichtdurchlässigkeit verwendet werden.

Illustrierende Beispiele für Tauchsonden und Referenzkomponenten, im Übrigen auch z.B. für Küvetten, die jedoch noch nicht die erfindungsgemäß erhältlichen Quarzgläser umfassen, finden sich im "Produktkatalog BestCeller" - Optische Komponenten für UV/VIS/NIR-Spektroskopie der Hellma GmbH & Co. KG, Version 064-506-PB01-725//D//01//2018.

"Licht" (auch als Wortbestandteil wie in lichtabsorbierend, lichtundurchlässig oder Lichtabsorption) bedeutet im Rahmen der vorliegenden Offenbarung elektromagnetische Strahlung im ultravioletten (UV-), sichtbaren (VIS-) und/oder (insbesondere Nah-) Infrarot (IR oder insbesondere NIR-) Bereich. Für die erfindungsgemäßen Ausführungsformen liegt ein typischer Wellenlängenbereich bei 190 bis 3200 nm.

Die (z.B. mikroskopisch oder submikroskopisch) feine Verteilung des aus Kohlenstoff in siliziumorganischen Verbindungen (unter Bildung von Kohlenstoff in ein oder mehreren grau- oder schwarzfärbenden Erscheinungsformen) pyrolytisch freigesetzten Kohlenstoffs bedeutet, dass der so in situ (innerhalb der Matrix der Vorstufen des Quarzglases) hergestellte Kohlenstoff in Form sehr feiner grau- oder insbesondere schwarzfärbender - Partikel vorliegt, die je Partikel mehrere Kohlenstoffatome als solche enthalten und so "schwarz" erscheinen. Sie werden erst während eines Pyrolyseschrittes aus Kohlenstoff der eingesetzten siliziumorganischen Verbindungen gebildet.

Der Begriff "Partikel" ist hier in Unterscheidung zu den Molekülen der Präkursoren (siliziumorganische Verbindungen) zu verstehen. Dort ist der Kohlenstoff noch kovalent an Silizium und gegebenenfalls andere Kohlenstoffatome in einem organischen Rest gebunden und liegt nicht als freier (gräulicher oder schwarzer) Kohlenstoff vor.

Wo das Attribut "ferner" erwähnt wird, bedeutet dies, dass Merkmale ohne dieses Attribut stärker bevorzugt sind.

Wo bei Zahlenangaben von "etwa" oder "ungefähr" die Rede ist, bedeutet dies vorzugsweise den jeweiligen Zahlenwert ± 10 %, oder insbesondere ± 5 %. Vorzugsweise gilt jeweils genau der Zahlenwert.

Und/oder" bedeutet insbesondere, dass die genannten Merkmale/Substanzen jeweils alleine oder in Kombination von zwei oder mehr der jeweils genannten Merkmale vorliegen können.

"Aufweisen", "beinhalten", "umfassen" oder "mit" bedeutet, dass neben den genannten Bestandteilen oder Komponenten oder Merkmalen noch andere vorhanden sein können, steht also für eine nicht abschließende Aufzählung, im Gegensatz zu "bestehen aus", das eine abschließende Aufzählung der bei seiner Verwendung aufgezählten Bestandteile/Komponenten/Merkmale bedeutet. Vorzugsweise kann anstelle von "aufweisen", "beinhalten" oder "umfassen" das abschließende "bestehen aus" eingesetzt werden.

Wo "ein" oder "eine" verwendet wird, ist dies (sofern nicht anders, beispielsweise durch Voranstellen von "mindestens", ersichtlich) in erster Linie als der unbestimmte Artikel zu verstehen und beinhaltet "ein (in Zahlen: 1) oder mehrere" wie auch nur ein(e) (in Zahlen: 1). Anders ausgedrückt, bedeutet "ein" oder "eine" "ein(e) oder mehr, z.B. zwei oder drei oder vier". "Mindestens ein" steht für ein (1) oder mehrere. Wo der Plural verwendet wird, schließt dies auch den Singular ein.

Eine anorganische Base ist vorzugsweise eine flüchtige Base wie Ammoniumcarbonat, Ammoniumbicarbonat oder insbesondere Ammoniak.

Eine organische Säure kann beispielsweise eine Alkancarbonsäure, wie Essigsäure (bevorzugt) oder Ameisensäure, sein.

Eine anorganische Säure ist vorzugsweise ausgewählt aus Schwefelsäure, Salpetersäure oder insbesondere einem Halogenwasserstoff, in erster Linie HCl.

Die erfindungsgemäß herstellbaren bzw. hergestellten Formkörper/Formteile weisen vorzugsweise eine Mindestdicke von 0,5 mm, insbesondere von 1 mm, vorzugsweise von 0,5 oder 1 bis 20 mm, auf und können eine Länge und Breite von jeweils 2 bis 200 mm haben.

Alle Reaktionen in den erfindungsgemäßen Verfahren und Anwendungen finden vorzugsweise ohne Netz- und Dispergiermittel und ohne zugesetzte organische Lösungsmittel statt.

Ein chemisch inertes oder reaktionsinertes Substrat ist ein solches, das bei Pyrolyse und Sinterung keine Nebenreaktionen ermöglicht, in erster Linie, um störende chemische Reaktionen, im Inneren (z.B. durch Entwicklung störender Gase) und vor allem an der Außenseite des Formkörpers zu vermeiden

Bei allen Erfindungsverkörperungen beinhaltet das Sol/Gel-verfahren eine Solbildung der drei genannten Bestandteile (i), (ii) und (iii) in Wasser (vorzugsweise ohne weiteres Lösungsmittel) bei saurem pH-Wert in Gegenwart einer anorganischen Säure, insbesondere von Salzsäure, (z.B. unter pH = 5, beispielsweise im Bereich von pH 1,5 bis 3,5, wie pH 2 bis 3, pH 2,1 bis 2,5 oder pH 2,3); eine Gelierung (Kondensation) in nur noch leicht saurem Bereich in Wasser nach Zugabe einer (vorzugsweise bei späterem Erhitzen flüchtigen) anorganischen Base, wie Ammoniumhydroxid; und das weitere Verfahren einen ersten Temperaturbehandlungsschritt zur Pyrolyse und einen direkt anschließenden oder separaten zweiten Temperaturbehandlungsschritt zur Sinterung unter Ausschluss von Sauerstoff, beispielsweise unter Inertgas, wie Stickstoff, Argon oder insbesondere Helium (vor allem bei höheren Temperaturen); dass die Sinterung und vorzugsweise auch die Pyrolyse im direkten Kontakt des entstehenden Formkörpers auf einem chemisch (reaktions-) inerten Substrat durchgeführt wird; oder eine, oder zwei oder mehr oder alle dieser Maßnahmen. Vorteilhaft kann im Rahmen der Hydrolyse eine Sedimentation durchgeführt werden, was ermöglicht, Agglomerationen oder Partikel, die z.B. durch das dispergierte Silizium entstehen, herauszufiltern.

Unter "Sol" ist vorzugsweise eine (fließfähige) kolloidale Dispersion (beinhaltend die siliziumorganischen Verbindungen und Siliziumdioxid) zu verstehen. Unter "Gel" ist ein durch Hydrolyse und Kondensation zu einem Gelgerüst mit in (als interpenetrierendes Netzwerk vorliegenden) Poren eingeschlossener Flüssigkeit (bei der Hydrolyse freigesetzter Alkohol, Wasser, zugesetzte Säure, zugesetzte Base und/oder dergleichen) ausgebildeter viskoelastischer Festkörper zu verstehen.

Nach der Trocknung liegt das Gel als Trockengel (Xerogel) vor.

Ein Sol-Gel-Verfahren beinhaltet erfindungsgemäß die Gelierung des Sols, die Trocknung des resultierenden Gels und weiter mindestens einen Temperaturbehandlungsschritt bei erhöhter Temperatur, vorzugsweise einen Pyrolyseschritt (zum Freisetzen von nicht mehr kovalent gebundenem Kohlenstoff unter Bildung von Kohlenstoff in ein oder mehreren grau- oder schwarzfärbenden Erscheinungsformen) und einen direkt anschließenden oder nachfolgenden Sinterungsschritt.

Insbesondere im Zusammenhang mit den in erfindungsgemäßen Verwendungen und Verfahren zu verwendenden zwei Typen siliziumorganischer Verbindungen und des (vorzugsweise als wässrige Dispersion eingesetzten) Siliziumdioxids sind diese drei Bestandteile vorzugsweise ohne weitere Zusätze (außer dem Wasser und außer Säuren und Basen zur pH-Einstellung) eingesetzt.

### Figuren:

Fig. 1 zeigt ein Ablaufdiagramm für ein Herstellungsverfahren oder eine Verwendung gemäß der Erfindung als Flussdiagramm.

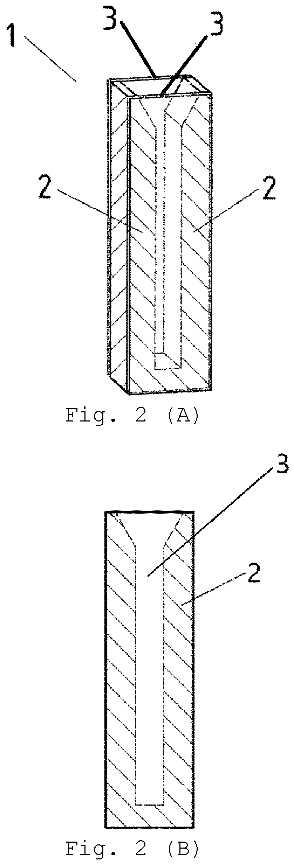

Fig. 2 (A) zeigt eine dreidimensionale Ansicht einer mit Plättchen aus erfindungsgemäßem Quarzglas und transparentem Quarzglas hergestellten Küvette (1), Fig. 2 (B) zeigt schematisch eine Draufsicht einer aus Plättchen aus erfindungsgemäßem Quarzglas und transparentem Quarzglas hergestellte Küvette (1), jeweils mit erfindungsgemäß schwarzem Quarzglas (schraffiert)(2) und transparentem (nicht schraffiert) Quarzglas (3).

Die nachfolgenden Beispiele dienen der Illustration der Erfindung, ohne ihren Umfang einzuschränken, stellen jedoch selbst auch besondere Ausführungsformen der Erfindung dar.

### Beispiel 1: Ablaufdiagramm

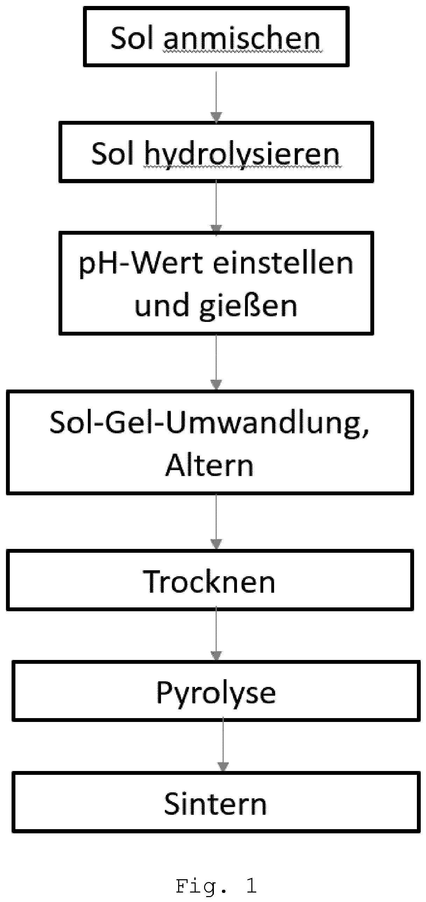

Fig. 1 zeigt exemplarisch einen Überblick über bei bevorzugten erfindungsgemäßen Verfahren und Verwendungen vorgenommene Schritte im Rahmen eines Sol-Gel-Prozesses zur Herstellung von Quarzgläsern mit grauer oder schwarzer Färbung.

Das Sol wird zunächst unter Zufügen seiner drei Hauptkomponenten (erste siliziumorganische Verbindung, zweite siliziumorganische Verbindung und wässrige Kieselsäure, wie oben definiert) hergestellt. Hierbei wird auch der pH-Wert abgesenkt und so die Hydrolyse in Gang gesetzt. Nach Einstellung eines leicht erhöhten, immer noch sauren pH-Wertes wird das erhaltene Material in Formen, ohne oder optional mit einem zapfenartig insbesondere von oben eintauchenden Kern beispielsweise für die Herstellung eines küvettenförmigen Formkörpers, für (beispielsweise plattenförmige oder direkt halbküvetten- oder küvettenförmige) Formkörper gegossen. Beim anschließenden Stehenlassen, bei dem ein wegen vorhandener Poren milchig weißer viskoelastischer bis rein elastischer Formkörper gebildet wird, findet nach der Gelierung (Gelbildung) eine Alterung statt, bei der weitere Vernetzungen stattfinden. Alle bisherigen Schritte können im Wesentlichen bei Raumtemperatur stattfinden. Im Anschluss an eine Entkernung und ggf. Entformung folgt eine Trocknung. Bei allen bisherigen Schritten findet ein Schrumpfen des ursprünglichen Materials für den Formkörper statt. In einem nächsten Schritt werden die entformten freien Formkörper auf einem chemisch inerten Substrat einer Pyrolyse bei Temperaturen bis zu maximal etwa 900 °C (bevorzugte genauere Temperaturangaben siehe oben) unterzogen, und dann folgt eine Sinterung bei weiter erhöhten Temperaturen bis maximal etwa 1400 °C (bevorzugte genauere Temperaturangaben siehe oben). Auch beim Pyrolysieren und Sintern kann eine weitere Schrumpfung stattfinden. Es resultiert ein Formkörper (beispielsweise Quarzglasplatte) oder eine Halbküvette oder Küvette von sehr homogener Grau- oder Schwarztönung mit porenfreier Matrix und (insbesondere nach Polieren) glatter Oberfläche.

Ohne dass dies den Umfang der Erfindungsgegenstände einschränken muss, können dabei folgende chemische Reaktionen angenommen werden:
Am Anfang werden in H₂O dispergierte Siliziumdioxidpartikel, schematisch wie folgt anzusehen 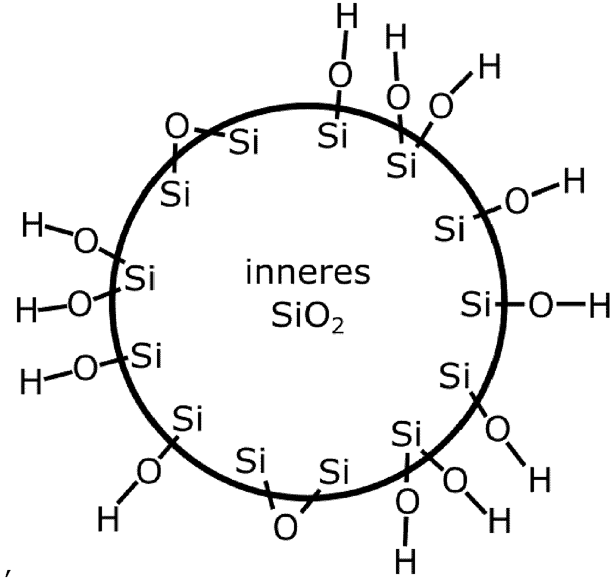 und eine siliziumorganische Verbindung mit 4 über Sauerstoff gebundenen (folglich hydrolysierbaren) organischen Resten, hier wird beispielsweise TEOS gezeigt 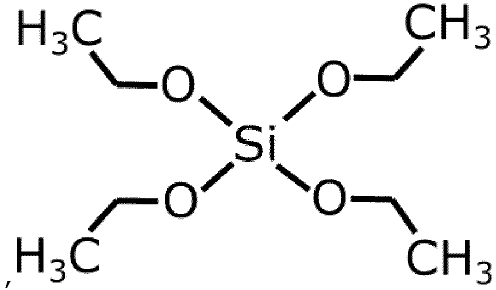 und eine siliziumorganische Verbindung mit direkt an Si gebundenem Kohlenstoff eines organischen Restes und weiter hydrolysierbaren organischen Resten, hier beispielsweise (das erfindungsgemäß sehr bevorzugte) Vinyltriethoxysilan, 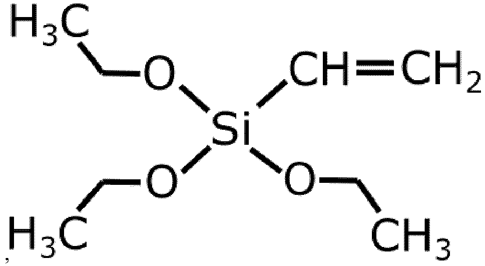 vermischt.

Nach Zugabe von Säure, beispielsweise HCl, werden die über Sauerstoff gebundenen organischen Reste in den beiden siliziumorganischen Verbindungen abgespalten (in den exemplarisch gezeigten Verbindungen als Ethanol) und anstelle der über O gebundenen organischen Reste entstehen Si-gebundene OH-Gruppen. Gemäß dem nachfolgenden Reaktionsschema werden dann (vorzugsweise nach Stehenlassen) unter leichter Erhöhung des pH-Wertes (z.B. mittels NH₄OH) die drei Komponenten miteinander unter Kondensation vernetzt:

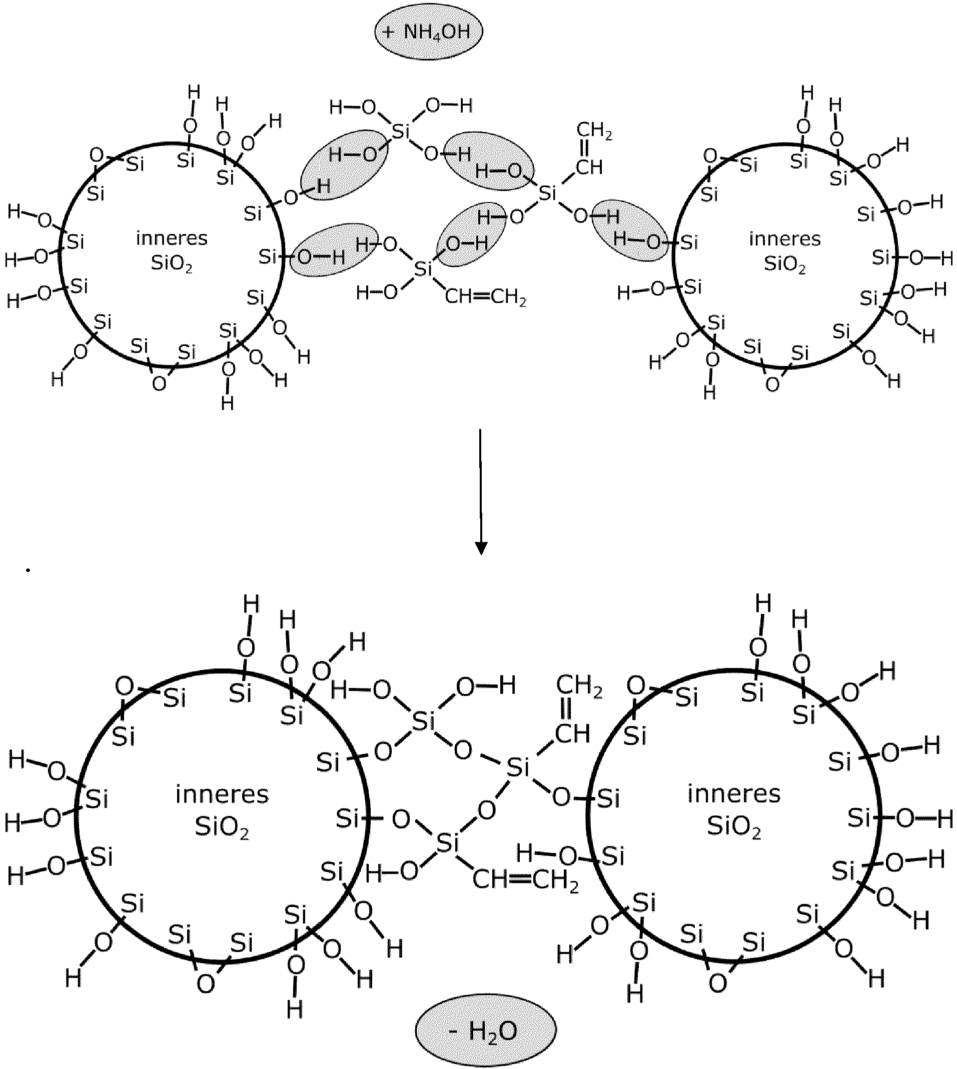

So entsteht unter dreidimensionaler Vernetzung ein Gel. Dieses wird dann den weiteren genannten Schritten unterzogen.

Im nächsten Schritt werden die Gele zu einem dichten, kompakten Glas nach Sauerstoffbeseitigung unter Inertgas pyrolysiert und gesintert unter Steigerung der Temperatur auf ca. 700 °C, die Temperatur für einige Stunden gehalten und dann auf 1250 °C erhöht und für eine Stunde gehalten. Dadurch erhält man homogene schwarze Quarzglasproben

### Beispiel 2: Herstellung eines schwarzen Quarzglases unter Verwendung von Vinyltriethoxysilan

175,59 g Tetraethylorthosilicat, 6,73 g Vinyltriethoxysilan, 2,54 g Salzsäure (1 mol/l), 329,79 g kolloidales Siliziumdioxid (Dispersion aus 21 Gew.-% raumlufttrockenem kolloidalem Siliziumdioxid und 79 Gew.-% VE Wasser) und 9,17 g VE-Wasser werden unter Rühren miteinander vermischt. Dabei kommt es zur Hydrolyse der hydrolysierbaren Gruppen des Vinyltriethoxysilans und des Tetraethylorthosilikats. Das homogene Sol wird in einem Behälter über Nacht stehen gelassen. Im Anschluss wird unter Rühren 0,6 molare Ammoniaklösung dazugegeben und so der pH-Wert auf 5 erhöht.

Direkt im Anschluss wird das Sol in Behälter aus Polypropylen der Größe 5 x 3 x 1,5 cm gegossen. Diese werden mit einem Deckel verschlossen. Das Sol geliert innerhalb der nächsten Stunde. Die Behälter werden bei Raumtemperatur 3 Tage stehen gelassen. Danach werden die Deckel durch Deckel mit einem Loch (Durchmesser 4 mm) ersetzt. Mit diesen Deckeln kommen die gefüllten Behälter für 3-5 Tage in einen Trockenofen bei Temperaturen um die 50 °C und einer relativen Luftfeuchte von etwa 10 bis höchstens 50%. Anschließend werden die Gele aus den Behältern genommen und für 3 weitere Tage im Trockenofen gelagert. Dadurch erhält man stabile, trockene, weiße (Xero- )Gele.

Im nächsten Schritt werden die Gele zu einem dichten, kompakten Glas nach Sauerstoffbeseitigung unter Inertgas pyrolysiert und gesintert unter Steigerung der Temperatur auf ca. 700 °C, die Temperatur wird für einige Stunden gehalten und dann auf 1250 °C erhöht und für eine Stunde gehalten. Dadurch erhält man homogene schwarze Quarzglasproben.

Diese zeigen nach beidseitigem Polieren auf eine Dicke von 1 mm im Bereich von 200 bis über 2000 nm eine Transmission im Bereich von 0 bis 0,2 %, bei Wellenlängen oberhalb von 2000 bis 3200 nm eine Transmission von weniger als 2 %.

Das so hergestellte Material ist frei von Blasen, Defekten und Inhomogenitäten. Außerdem gibt es keine Kohlenstoff-Agglomerationen sondern eine homogene Verteilung. Dies äußert sich besonders darin, dass sich das Material defektfrei mit anderen handelsüblichen transparenten und schwarzen Quarzgläsern thermisch verbinden (Bonden) lässt. Außerdem zeigt das Material bei Anregung mit UV-Licht der Wellenlänge 254 nm mit einer handgehaltenen UV-Lampe mit einer Leistung von 4 W nur eine sehr geringe orangenfarbene Fluoreszenz.

### Beispiel 3: Herstellung eines schwarzen Quarzglases unter Verwendung von Phenyltriethoxysilan

326,12 g Tetraethylorthosilicat, 12,14 g Phenyltriethoxysilan, 5,08 g Salzsäure (1 mol/l), 700,16 g kolloidales Siliziumdioxid (Dispersion aus 21 Gew.-% raumlufttrockenem kolloidalem Siliziumdioxid und 79 Gew.-% VE Wasser) und 13,35 g VE-Wasser werden unter Rühren miteinander vermischt. Dabei kommt es zur Hydrolyse des Phenyltriethoxysilans und des Tetraethylorthosilicats. Das homogene Sol wird über Nacht stehen gelassen.

Im Anschluss wird unter Rühren 0,6 molare Ammoniaklösung dazugegeben und so der pH-Wert auf 5 erhöht.

Direkt im Anschluss wird das Sol in Behälter aus Polypropylen der Größe 2,75 x 2,75 x 10,35 cm gegossen. Diese werden mit einem Deckel verschlossen. Das Sol geliert innerhalb der nächsten Stunde. Die Behälter werden bei Raumtemperatur 3 Tage stehen gelassen. Danach werden nach der Entfernung der Deckel von den Formen die Teile für 10-14 Tage in einem Trockenofen bei knapp 50 °C und einer relativen Luftfeuchte von etwa 10 bis höchstens 50%getrocknet. Anschließend werden die Gele aus den Behältern genommen. Dadurch erhält man stabile, trockene, weiße Gele (Xerogele).

Im nächsten Schritt werden die Gele zu einem dichten, kompakten Glas nach Sauerstoffbeseitigung unter Inertgas pyrolysiert und gesintert unter Bedingungen wie für Beispiel 2 beschrieben.

Bei den mit diesem Prozess hergestellten Proben ist die Transmission so gering, dass diese bei einer auf 1 mm beidseitig polierten Probe nicht gemessen werden konnte.

Das so hergestellte Material ist frei von Blasen, Defekten und Inhomogenitäten. Außerdem gibt es keine Kohlenstoff-Agglomerationen sondern eine homogene Verteilung. Dies äußert sich besonders darin, dass sich das Material defektfrei mit anderen handelsüblichen transparenten und schwarzen Quarzgläsern thermisch verbinden (Bonden) lässt.

Außerdem zeigt das Material bei Anregung mit UV-Licht der Wellenlänge 254 nm und einer Leistung von 4 W (Handlampe) eine mäßige orangenfarbene Fluoreszenz.

### Beispiel 4: Herstellung eines grauen Quarzglases unter Verwendung von Methyltriethoxysilan

105,99 g Tetraethylorthosilicat, 3,24 g Methyltriethoxysilane, 1,52 g Salzsäure (1 mol/l), 197,87 g kolloidales Siliziumdioxid (Dispersion aus 21 Gew.-% raumlufttrockenem kolloidalem Siliziumdioxid und 79 Gew.-% VE Wasser) und 5,5 g VE-Wasser werden unter Rühren miteinander vermischt. Dabei kommt es zur Hydrolyse des Methyltriethoxysilans und des Tetraethylorthosilicats. Das homogene Sol wird über Nacht in einem Behälter stehen gelassen.

Im Anschluss wird unter Rühren 0,6 molare Ammoniaklösung dazugegeben und so der pH-Wert auf 4,7 erhöht.

Direkt im Anschluss wird das Sol in Behälter aus Polypropylen der Größe 5 x 3 x 1,5 cm gegossen. Diese werden mit einem Deckel verschlossen. Das Sol geliert innerhalb der nächsten Stunde. Die Behälter werden bei Raumtemperatur 3 Tage stehen gelassen. Danach werden die Deckel durch Deckel mit einem Loch (Durchmesser 4 mm) ersetzt. Mit diesen Deckeln kommen die gefüllten Behälter für 3-5 Tage in einen Trockenofen bei Temperaturen um die 50 °C und einer relativen Luftfeuchte von etwa 10 bis höchstens 50%. Anschließend werden die Gele aus den Behältern genommen. Dadurch erhält man stabile, trockene, weiße Gele (Xerogele).

Im nächsten Schritt werden die Gele zu einem dichten, kompakten Glas nach Sauerstoffbeseitigung unter Inertgas pyrolysiert und gesintert wie für Beispiel 2 beschrieben. Dadurch erhält man homogene graue Quarzglasproben.

Nach beidseitigem Polieren auf eine Dicke von 1 mm zeigen die Proben eine mit der Wellenlänge zwischen 200 und 2500 nm ansteigende Transmission zwischen 0 und 85 % und mit einem Transmisssionsminimum bei einer Wellenlänge von 240 bis 245 nm. "Freie" OH-Gruppen führen außerdem zu einem Transmissionsminimum bei ca. 2650-2850 nm.

Das so hergestellte Material ist frei von Blasen, Defekten und Inhomogenitäten. Außerdem gibt es keine Kohlenstoff-Agglomerationen sondern eine homogene Verteilung. Dies äußert sich besonders darin, dass sich das Material defektfrei mit anderen handelsüblichen transparenten und schwarzen Quarzgläsern thermisch verbinden (Bonden) lässt.

Außerdem zeigt das Material bei Anregung mit UV-Licht der Wellenlänge 254 nm und einer Leistung von 4 W mittels Handlampe keine sichtbare Fluoreszenz.

## Patentansprüche

1. Verfahren zur Herstellung eines grauen oder schwarzen Quarzglases in Form eines Formteils für optische Anwendungen, beinhaltend folgende Schritte:
- Herstellung eines wässrigen Sols aus (iii) einer wässrigen Dispersion aus Siliziumdioxid, (i) einem Anteil einer ersten siliziumorganischen Verbindung, die mindestens einen an Silizium direkt über Kohlenstoff gebundenen organischen Rest und zugleich mindestens einen, vorzugsweise zwei oder insbesondere drei, an Silizium gebundene hydrolysierbare (insbesondere an das Silizium über ein Sauerstoffatom gebundene) organische Reste beinhaltet,
und (ii) einer zweiten siliziumorganischen Verbindung mit nur über Sauerstoff an Silizium gebunden organischen Resten, wobei unter Einstellung eines sauren pH-Wertes mittels einer organischen oder anorganischen Säure Hydrolyse eintritt;
- nach Stehenlassen Erhöhung des pH-Wertes mittels einer anorganischen Base, wobei der pH-Wert im leicht sauren Bereich eingestellt wird;
- Gießen des Sols in eine Form zur Herstellung des Formteils;
- Gelbildung;
- Altern, dann Trocknung,
- Freisetzung von chemisch gebundenem Kohlenstoff als solchem unter Bildung von Kohlenstoff in ein oder mehreren grau- oder schwarzfärbenden Erscheinungsformen durch wenigstens eine Temperaturbehandlung zur Pyrolyse und/oder zum Sintern des Formteils, wobei das Formteil während der Temperaturbehandlung einer einzigen Temperaturbehandlung bis zu einer Höchsttemperatur oder mindestens zwei Temperaturbehandlungen mit mindestens zwei unterschiedlichen Höchsttemperaturen unterzogen wird, vorzugsweise einer ersten Temperaturbehandlung zur Pyrolyse und dann einer zweiten Temperaturbehandlung unter höheren Temperaturen als bei der ersten Temperaturbehandlung, gegebenenfalls unter weiterer Pyrolyse, zum Sintern; wobei die Temperaturbehandlung(en) unter Inertgas oder Vakuum oder einem reduzierenden Gas, oder einer Kombination von zwei oder mehr der genannten Varianten und vorzugsweise auf einem chemisch inerten Substrat durchgeführt werden.

2. Verfahren gemäß Anspruch 1, wobei die über Sauerstoff an Silizium gebundenen organischen Reste aus Alkyloxy (= Alkoxy), Alkenyloxy, Alkinyloxy, Phenyloxy, Phenylalkyloxy, Alkenylcarbonyloxyalkyloxy, Glycidyloxyalkyloxy, Mercaptoalkyloxy und Aminoalkylaminoalkyloxy ausgewählt sind; und die über Kohlenstoff an Silizium gebundenen organischen Reste unabhängig voneinander aus Alkyl, Alkenyl, Alkinyl, Phenyl, Phenylalkyl, Alkenylcarbonyloxyalkyl, Glycidyloxyalkyl, Mercaptoalkyl und Aminoalkylaminoalkyl ausgewählt sind, insbesondere aus Alkenyl, Phenyl und/oder ferner Alkyl; in erster Linie aus Alkenyl, wie Vinyl oder ferner Allyl; wobei jeweils Alkyl und -alkyl, letzteres als Ende einer Bezeichnung eines genannten Verbindungstyps, unabhängig voneinander verzweigt oder unverzweigt sind und vorzugsweise jeweils ein bis acht Kohlenstoffatome aufweisen und Alkenyl und Alkinyl ebenfalls unabhängig voneinander verzweigt oder unverzweigt sind und vorzugsweise jeweils zwei bis acht Kohlenstoffatome aufweisen.

3. Verfahren nach Anspruch 1, beinhaltend, dass oder wobei nach einer oder der Solherstellung das Sol auf einen sauren pH-Wert, vorteilhaft im Bereich von 1 bis 5, vorteilhafter von 1,5 bis 3,5, insbesondere von 2 bis 3, vorzugsweise auf pH 2,1 bis 2,5, beispielsweise auf pH 2,3, eingestellt wird, vorzugsweise durch Zugabe von einer organischen oder anorganischen Säure, wie Salzsäure.

4. Verfahren nach einem der vorstehenden Ansprüche 1 bis 3, beinhalten, dass oder wobei der pH-Wert vor einem oder dem Gießen in eine gewünschte Form auf einen weniger sauren pH-als bei der Solherstellung, vorzugsweise einen leicht sauren pH-Wert von 4 bis 6,5, insbesondere von 4 bis 5, vorteilhaft von 4,5 bis 5 eingestellt wird, vorzugsweise durch Zugabe einer flüchtigen anorganischen Base, insbesondere von Ammoniumhydroxid.

5. Verfahren nach einem der Ansprüche 1 bis 4, beinhaltend dass oder wobei als zweite siliziumorganische Verbindung Tetraethylorthosilikat und/oder Tetramethylorthosilikat zugegeben wird; und/oder
als erste siliziumorganische Verbindung Vinyltriethoxysilan und/oder Methyltriethoxysilan und/oder Phenyltriethoxysilan, insbesondere Vinyltriethoxysilan, zugegeben wird.

6. Verfahren nach einem der Ansprüche 1 bis 5, beinhaltend, dass oder wobei ein oder das Formteil nach dem Gießen in eine gewünschte Form und/oder vor einer Entformung des Formteils und/oder vor einem Trocknungsschritt in einem Alterungsschritt behandelt wird, insbesondere wobei das Formteil während des Alterungsschrittes bei Raumtemperatur altert.

7. Verfahren nach einem der Ansprüche 1 bis 6,
beinhaltend dass oder wobei das Formteil vor einer oder der wenigstens einen Temperaturbehandlung getrocknet wird, vorzugsweise bei erhöhter Temperatur, insbesondere bei einer Temperatur von 30 bis 70 °C, vor allem von 45 bis 55 °C und/oder einer relativen Luftfeuchtigkeit von 5% bis 50 %, vorzugsweise von 10%-20%.

8. Verfahren nach einem der Ansprüche 1 bis 7,
beinhaltend dass oder wobei ein oder der wenigstens eine Temperaturbehandlungsschritt unter Inertgas ausgewählt aus Stickstoff, Helium und Argon, oder Vakuum, oder Wasserstoff, oder einer Kombination von zwei oder mehr der genannten Varianten, durchgeführt wird.

9. Verfahren nach einem der Ansprüche 1 bis 8, beinhaltend dass oder wobei der Kohlenstoffgehalt des direkt über Kohlenstoff an Silizium gebundenen organischen Rests im Sol der ersten siliziumorganischen Verbindung im Verhältnis zu dem im fertigen Quarzglas verbleibenden Siliziumdioxid maximal 20 000 ppm in Gewichtsanteilen, vorzugsweise von maximal 15 000 ppm, beispielsweise von 8 000 bis 10 000 ppm, in Gewichtsanteilen verwendet wird; und/oder beinhaltend dass oder wobei das Sol vorzugsweise frei von als solchen zugesetzten grau- oder schwarzfärbenden Kohlenstoffpartikeln und/oder frei von Netz- und Dispergiermitteln und von organischen Lösungsmitteln ist.

10. Verfahren nach einem der Ansprüche 1 bis 9, beinhaltend dass oder wobei ein oder das Formteil während eines oder des ersten Temperaturbehandlungsstufe vorzugsweise bis maximal etwa 1000 oder vorzugsweise bis maximal etwa 900 °C oder insbesondere bis maximal etwa 800 °C, vorzugsweise von 600 bis 800 °C, beispielsweise von 680 bis 750 °C oder von 700 bis 800 °C, und/oder in einer zweiten Temperaturbehandlungsstufe bis maximal etwa 1400 °C, vorzugsweise von 1150 bis 1380 °C, insbesondere von 1200 bis 1350 °C, behandelt wird.

11. Verfahren nach einem der Ansprüche 1 bis 10, beinhaltend dass oder wobei das hergestellte Quarzglas weiter zur Herstellung von optischen Komponenten für UV/VIS/NIR-Spektroskopie verwendet wird, wie z.B. einem Probenhalter, wie einer Küvette, einer Mikromesszelle, einem Messkopf von Tauchsonden, einer Mikrotiterplatte oder einem Referenzmaterial oder Referenzelement - die jeweils teilweise oder ganz in grau oder schwarz ausgeführt sein können - verwendet wird.

12. Verwendung eines Sol-Gel-Verfahrens zur Herstellung eines grauen oder schwarzen Quarzglases mit einem beabsichtigten Grauheits- oder Schwärzegrad in Form eines Formteils umfassend ein Sol-Gelverfahren, beinhaltend die Umsetzung (i) einer ersten siliziumorganischen Verbindung, die mindestens einen an Silizium direkt über Kohlenstoff gebundenen organischen Rest und zugleich mindestens einen, vorzugsweise zwei oder mehr, insbesondere drei, an Silizium gebundene hydrolysierbare (insbesondere an das Silizium über ein Sauerstoffatom gebundene) organische Reste beinhaltet, (ii) einer zweiten siliziumorganischen Verbindung mit nur über Sauerstoff an Silizium gebundenen, somit alle hydrolisierbaren, organischen Resten und (iii) von Siliziumdioxid als dritter Komponente in dem Sol-Gel-Verfahren mit einem pyrolytischen Schritt, und vorzugsweise einem Sinterschritt, wobei der pyrolytische Schritt und der Sinterschritt mittels ein oder mehrerer, insbesondere mittels eines oder zweier Temperaturbehandlungsschritte, unter Einstellung einer beabsichtigten Graustufe bis hin zu schwarz durch Einstellung des Mengenanteils der ersten siliziumorganischen Verbindung im Sol und ferner der Pyrolysebedingungen durchgeführt wird.

13. Verwendung nach Anspruch 12, beinhaltend ein Verfahren nach einem der Ansprüche 1 bis 11.

## Claims

1. Method for producing a gray or black quartz glass in the form of a molded part for optical applications, containing the following steps of:
- preparing an aqueous sol from (iii) an aqueous dispersion of silicon dioxide, (i) a proportion of a first organosilicon compound which contains at least one organic radical bonded to silicon directly via carbon and at the same time at least one, preferably two or in particular three, organic radicals which can be hydrolyzed (in particular bonded to silicon via an oxygen atom),
and (ii) a second organosilicon compound with organic radicals bonded to silicon only via oxygen, wherein hydrolysis occurs with adjustment of an acidic pH value by means of an organic or inorganic acid;
- after leaving to stand, increasing the pH value using an inorganic base, wherein the pH value is set in the slightly acidic range;
- pouring the sol into a mold to produce the molded part;
- gel formation;
- aging, then drying,
- releasing chemically bound carbon as such with formation of carbon in one or more grey or black coloring manifestations by at least one temperature treatment for pyrolysis and/or sintering of the molded part, wherein during the temperature treatment the molded part is subjected to a single temperature treatment up to a maximum temperature or at least two temperature treatments with at least two different maximum temperatures, preferably a first temperature treatment for pyrolysis and then a second temperature treatment at higher temperatures than in the first temperature treatment, optionally with further pyrolysis, for sintering;
wherein the temperature treatment(s) are carried out under inert gas or vacuum or a reducing gas, or a combination of two or more of said variants and preferably on a chemically inert substrate.

2. Method according to claim 1, wherein the organic radicals bonded to silicon via oxygen are selected from alkyloxy (= alkoxy), alkenyloxy, alkynyloxy, phenyloxy, phenylalkyloxy, alkenylcarbonyloxyalkyloxy, glycidyloxyalkyloxy, mercapto-alkyloxy and aminoalkylaminoalkyloxy; and the organic radicals bonded to silicon via carbon are independently selected from alkyl, alkenyl, alkynyl, phenyl, phenylalkyl, alkenylcarbonyloxyalkyl, glycidyloxyalkyl, mercaptoalkyl and aminoalkylaminoalkyl, in particular from alkenyl, phenyl and/or furthermore alkyl; primarily from alkenyl, such as vinyl or further allyl; wherein each alkyl and -alkyl, the latter as the end of a designation of a said compound type, are independently branched or unbranched and preferably each have one to eight carbon atoms and alkenyl and alkynyl are also independently branched or unbranched and preferably each have two to eight carbon atoms.

3. Method according to claim 1, containing in that or wherein after one or more of the sol preparations, adjusting the sol to an acidic pH, advantageously in the range from 1 to 5, more advantageously from 1.5 to 3.5, in particular from 2 to 3, preferably to pH 2.1 to 2.5, for example to pH 2.3, preferably by adding an organic or inorganic acid, such as hydrochloric acid.

4. Method according to one of the preceding claims 1 to 3, containing in that or wherein adjusting the pH value prior to or pouring into a desired mold to a less acidic pH than in sol production, preferably a slightly acidic pH of from 4 to 6.5, in particular from 4 to 5, advantageously from 4.5 to 5, preferably by adding a volatile inorganic base, in particular ammonium hydroxide.

5. Method according to one of claims 1 to 4, containing in that or wherein adding as second organosilicon compound tetraethyl orthosilicate and/or tetramethyl orthosilicate; and/or
adding as first organosilicon compound vinyltriethoxysilane and/or methyltriethoxysilane and/or phenyltriethoxysilane, in particular vinyltriethoxysilane.

6. Method according to one of claims 1 to 5, containing in that or wherein a or the molded part is treated in an aging step after casting into a desired shape and/or before a demolding of the molded part and/or before a drying step, in particular wherein the molded part ages at room temperature during the aging step.

7. Method according to one of claims 1 to 6, containing in that or wherein drying the molded part prior to one or the at least one temperature treatment, preferably at an elevated temperature, in particular at a temperature from 30 to 70°C, in particular from 45 to 55°C and/or a relative humidity of from 5% to 50%, preferably from 10%-20%.

8. Method according to one of claims 1 to 7, containing in that or wherein performing one or more of the at least one temperature treatment step under inert gas selected from nitrogen, helium and argon, or vacuum, or hydrogen, or a combination of two or more of said variants.

9. Method according to one of claims 1 to 8, containing in that or wherein the carbon content of the organic residue directly bound to silicon via carbon in the sol of the first organosilicon compound in relation to the silicon dioxide remaining in the finished quartz glass is at most 20,000 ppm by weight, preferably at most 15,000 ppm, for example from 8,000 to 10,000 ppm, by weight; and/or containing in that or wherein the sol is preferably free of gray or black coloring carbon particles added as such and/or free of wetting and dispersing agents and of organic solvents.

10. Method according to one of claims 1 to 9, containing in that or wherein a or the molded part is treated during a or the first temperature treatment stage preferably up to a maximum of about 1000 or preferably up to a maximum of about 900°C or in particular up to a maximum of about 800°C, preferably from 600 to 800°C, for example from 680 to 750°C or from 700 to 800°C, and/or in a second temperature treatment stage up to a maximum of about 1400°C, preferably from 1150 to 1380°C, in particular from 1200 to 1350°C.

11. Method according to one of claims 1 to 10, containing in that or wherein the produced quartz glass is further used to produce optical components for UV/VIS/NIR spectroscopy, such as a sample holder, such as a cuvette, a micromeasuring cell, a measuring head of immersion probes, a microtiter plate or a reference material or reference element, each of which may be partially or entirely in gray or black.

12. Use of a sol-gel process for the production of a grey or black quartz glass with an intended degree of greyness or blackness in the form of a molded part comprising a sol-gel process, containing the reaction of (i) a first organosilicon compound which contains at least one organic radical bonded to silicon directly via carbon and at the same time at least one, preferably two or more, in particular three, organic radicals bonded to silicon which can be hydrolyzed (in particular bonded to the silicon via an oxygen atom), (ii) a second organosilicon compound with organic radicals bound to silicon only via oxygen and thus all hydrolyzable, and (iii) silicon dioxide as the third component in the sol-gel process with a pyrolytic step, and preferably a sintering step, wherein the pyrolytic step and the sintering step are carried out by means of one or more, in particular one or two, temperature treatment steps, with adjustment of an intended gray scale up to black by adjusting the proportion of the first organosilicon compound in the sol and also the pyrolysis conditions.

13. Use according to claim 12, containing a method according to one of claims 1 to 11.

## Revendications

1. Procédé pour la fabrication d'un verre de silice gris ou noir sous la forme d'un pièce moulée pour des applications optiques, incluant les étapes suivantes :
- fabrication d'un sol aqueux à partir (iii) d'une dispersion aqueuse de dioxyde de silicium, (i) d'une proportion d'un premier composé organique de silicium contenant au moins un radical organique lié directement au silicium par du carbone et en même temps au moins un, de préférence deux ou en particulier trois, radicaux organiques hydrolysables liés au silicium (en particulier liés au silicium par l'intermédiaire d'un atome d'oxygène) et (ii) d'un deuxième composé organique de silicium avec seulement des radicaux organiques liés au silicium par l'oxygène, une hydrolyse se produisant avec l'ajustement d'un pH acide au moyen d'un acide organique ou inorganique ;
- après un temps de repos, élévation du pH au moyen d'une base inorganique, le pH étant ajusté dans une plage légèrement acide ;
- coulée du sol dans une forme pour la fabrication de la pièce moulée ;
- gélification ;
- vieillissement, puis séchage ;
- libération de carbone lié chimiquement en tant que tel avec formation de carbone sous une ou plusieurs formes colorant en gris ou en noir par au moins un traitement thermique pour la pyrolyse et/ou le frittage de la pièce moulée, la pièce moulée étant soumise pendant le traitement thermique à un seul traitement thermique jusqu'à une température maximale ou à au moins deux traitements thermiques à au moins deux températures maximales différentes, de préférence à un premier traitement thermique pour la pyrolyse et ensuite à un deuxième traitement thermique à des températures plus élevées que le premier traitement thermique, avec éventuellement une autre pyrolyse, pour le frittage ; le(s) traitement(s) thermique(s) étant effectué(s) sous gaz inerte ou sous vide ou sous un gaz réduit ou un gaz réducteur ou une combinaison de deux ou plusieurs desdites variantes et de préférence sur un substrat chimiquement inerte.

2. Procédé selon la revendication 1, dans lequel des radicaux liés au silicium par l'intermédiaire d'oxygène sont choisis parmi les groupes alkyloxy (= alcoxy), alkényloxy, alkinyloxy, phényloxy, phénylalkyloxy, alkénylcarbonyloxyalkyloxy, glycidyloxyalkyloxy, mercaptoalkyloxy et aminoalkylaminoalkyloxy et les radicaux organiques liés au silicium par l'intermédiaire de carbone sont choisis indépendamment les uns des autres parmi les groupes alkyle, alcényle, alkinyle, phényle, phénylalkyle, alkénylcarbonyloxyalkyle, glycidyloxyalkyle, mercaptoalkyle et aminoalkylaminoalkyle, en particulier alkényle, phényle et/ou alkyle, principalement parmi alkényle, comme vinyle ou allyle ; alkyle et -alkyle, ce dernier se trouvant à la fin de la dénomination d'un type de composé cité, étant ramifiés ou non ramifiés indépendamment les uns des autres et comportant de préférence de un à huit atomes de carbone et alkényle et alkinyle étant également ramifiés ou non ramifiés indépendamment les uns des autres et comportant de préférence chacun de deux à huit atomes de carbone.

3. Procédé selon la revendication 1, incluant le fait que ou dans lequel, après une ou la fabrication du sol, le sol est ajusté à un pH acide, de préférence dans la plage de 1 à 5, plus avantageusement de 1,5 à 3,5, en particulier de 2 à 3, de préférence à pH 2,1 à 2,5, par exemple à pH 2,3, de préférence par l'ajout d'un acide organique ou inorganique tel que l'acide chlorhydrique.

4. Procédé selon l'une des revendications 1 à 3, incluant le fait que ou dans lequel le pH est ajusté avant une ou la coulée sous une forme souhaitée à un pH moins acide que lors de la fabrication du sol, de préférence un pH légèrement acide de 4 à 6,5, en particulier de 4 à 5, avantageusement de 4,5 à 5, de préférence par l'ajout d'une base inorganique volatile, en particulier d'hydroxyde d'ammonium.

5. Procédé selon l'une des revendications 1 à 4, incluant le fait que ou dans lequel le deuxième composé organique de silicium ajouté est de l'orthosilicate de tétraéthyle et/ou de l'orthosilicate de tétraméthyle ; et/ou
le premier composé organique de silicium ajouté est du vinyltriéthoxysilane et/ou du méthyltriéthoxysilane et/ou du phényltriéthoxysilane, en particulier du vinyltriéthoxysilane.

6. Procédé selon l'une des revendications 1 à 5, incluant le fait que ou dans lequel une ou la pièce moulée est traitée après la coulée sous une forme souhaitée et/ou traitée dans une étape de vieillissement avant le démoulage de la pièce moulée et/ou avant une étape de séchage, en particulier dans lequel la pièce moulée vieillit à température ambiante pendant l'étape de vieillissement.

7. Procédé selon l'une des revendications 1 à 6, incluant le fait que ou dans lequel la pièce moulée est séchée avant un ou l'au moins un traitement thermique, de préférence à une température élevée, en particulier à une température de 30 à 70 °C, surtout de 45 à 55 °C, et/ou une humidité relative de l'air de 5 % à 50 %, de préférence de 10 %-20 %.

8. Procédé selon l'une des revendications 1 à 7, incluant le fait que ou dans lequel une ou l'au moins une étape de traitement thermique est exécutée sous un gaz inerte choisi parmi l'azote, l'hélium et l'argon ou sous vide ou sous hydrogène ou une combinaison de deux ou plus desdites variantes.

9. Procédé selon l'une des revendications 1 à 8, incluant le fait que ou dans lequel la teneur en carbone du radical organique lié directement au silicium par l'intermédiaire de carbone utilisée dans le sol du premier composé organique de silicium par rapport au dioxyde de silicium restant dans le verre de silice fini est au maximum de 20 000 ppm en poids, de préférence au maximum de 15 000 ppm, par exemple de 8000 à 10 000 ppm en poids, et/ou incluant le fait que ou dans lequel le sol est de préférence dépourvu de particules de carbone colorant en gris ou en noir ajoutées comme telles et/ou dépourvu d'agents mouillants et ou dispersants et de solvants organiques.

10. Procédé selon l'une des revendications 1 à 9, incluant le fait que ou dans lequel une ou la pièce moulée est traitée pendant une ou la première étape de traitement thermique, de préférence jusqu'à environ 1000 au maximum ou de préférence jusqu'à environ 900 °C au maximum ou en particulier jusqu'à environ 800 °C au maximum, de préférence de 600 à 800 °C, par exemple de 680 à 750 °C ou de 700 à 800 °C, et/ou dans une deuxième étape de traitement thermique jusqu'à environ 1400 °C, de préférence de 1150 à 1380 °C, en particulier de 1200 à 1350 °C.

11. Procédé selon l'une des revendications 1 à 10, incluant le fait que ou dans lequel le verre de silice fabriqué est utilisé pour la fabrication de composants optiques pour la spectroscopie UV/VIS/NIR, par exemple pour un porte-échantillon tel qu'une cuvette, une microcellule de mesure, une tête de mesure de sondes à plongeur, une plaque de microtitration ou un matériau de référence ou un élément de référence, qui peuvent chacun être partiellement ou complètement réalisés en gris ou en noir.

12. Utilisation d'un procédé sol-gel pour la fabrication d'un verre de silice gris ou noir ayant un niveau de gris ou de noir voulu sous la forme d'une pièce moulée incluant un procédé sol-gel, comprenant la mise en oeuvre (i) d'un premier composé organique de silicium contenant au moins un radical organique lié directement au silicium par du carbone et en même temps au moins un, de préférence deux ou en particulier trois radicaux organiques hydrolysables liés au silicium (en particulier liés au silicium par l'intermédiaire d'un atome d'oxygène) et (ii) d'un deuxième composé organique de silicium avec seulement des radicaux organiques liés au silicium par de l'oxygène, donc tous des radicaux organiques hydrolysables, et (iii) de dioxyde de silicium constituant le troisième composant dans le procédé sol-gel avec une étape de pyrolyse et de préférence une étape de frittage, l'étape de pyrolyse et l'étape de frittage étant de préférence exécutées au moyen d'une ou deux étapes de traitement thermique, en ajustant un niveau de gris voulu jusqu'au noir par l'ajustement de la proportion du premier composé organique de silicium dans le sol et des conditions de pyrolyse.

13. Utilisation selon la revendication 12, incluant un procédé selon l'une des revendications 1 à 11.
